# EUROPEAN PATENT SPECIFICATION

(11) **EP 4 491 069 B1**
(45) Date of publication and mention of the grant of the patent: **04.02.2026**
(21) Application number: 23185509.9
(22) Date of filing: 14.07.2023
(51) Int. Cl.: A47J 31/36, A47J 31/44, A47J 31/60

(54) **MACHINE, DEFORMATION UNIT FOR SUCH A MACHINE AND METHOD FOR PREPARING A BEVERAGE WITH SUCH A MACHINE**
MASCHINE, VERFORMUNGSEINHEIT FÜR SOLCH EINE MASCHINE UND VERFAHREN ZUR HERSTELLUNG EINES GETRÄNKS MIT SOLCH EINER MASCHINE
MACHINE, UNITÉ DE DÉFORMATION POUR UNE TELLE MACHINE ET PROCÉDÉ DE PRÉPARATION D'UNE BOISSON AVEC UNE TELLE MACHINE

(43) Date of publication of application: 15.01.2025
(73) Proprietor: Société des Produits Nestlé S.A., 1800 Vevey (CH)
(72) Inventor: MORA, Federico, 1110 Morges (CH); LUETHI, Barthelemy, 1844 Villeneuve (CH); ZIMMER, Johannes, 1012 Lausanne (CH); ABEGGLEN, Daniel, 1091 Grandvaux (CH); HEYDEL, Christophe Sébastien Paul, 2025 Chez Le Bart (CH)
(74) Representative: Rosolen-Delarue, Katell

(56) References cited:
- EP-B1- 2 291 312
- WO-A1-2011/051867
- WO-A1-2014/078893
- WO-A1-2018/235044
- US-A1- 2010 212 520
- US-A1- 2021 068 580

## Description

### 1. Field of the invention

The present invention is directed to a preparation machine for preparing a beverage, in particular from single-serve capsules. The invention is further directed to a deformation unit for being used in such a preparation machine. The present invention is also directed to a method for preparing a beverage with such a preparation machine. Single-serve capsules generally include a capsule body, which may be made out of plastics or aluminum, and an organic component, like ground coffee, which is contained in the capsule body.

### 2. Technical background

In the field of single-serve capsules there is a general effort to reduce waste and to increase the disposability and recyclability of processed capsules. Usually the processed capsules must be collected at home by the users and brought from time to time to a collecting station like a shop. Then large quantities of processed capsules must be sent from the collecting station to a dedicated plant equipped with large machines which process bulks of processed capsule to separate the capsule bodies from the organic component, e.g. ground coffee. Once separated the organic component and the capsule bodies may be transferred to other plants for further processing and eventually recycling.

However, the whole process is complex and long until the capsule materials, in particular the organic component, may eventually be recycled and/or composted. In particular, it requires the user to carry loads of processed capsules that are relatively heavy and cumbersome all the way to the collecting station. Besides, the capsule body cannot be emptied from the organic component before the processed capsule is disposed of in a trash bin at home. It is not possible for the user to compost and recycle at home the used organic components.

Documents WO 2014 / 078 893 A, US 2021 / 068 580 A1, US 2010 / 212 520 A1, and WO 2011 / 051 867 A1 relate to capsule machines with means for separating the capsule from its contents.

### 3. Summary

It is thus an object of the present invention to provide a preparation machine for preparing a beverage by injecting a fluid in a capsule, the capsule having i) a capsule body defining a cavity and ii) a beverage component contained within the cavity, wherein the preparation machine comprises:
- a preparation unit having i) a preparation chamber for receiving the capsule and ii) means for injecting the fluid in the capsule to prepare the beverage, and
- a deformation unit having a deformation element, the deformation element being movable so as to deform the capsule body such that at least part of the beverage component is released from the cavity after the capsule has been processed in the preparation unit.

Thus, the processed capsule can be squeezed by the deformation element to release most or all of the used beverage component from the cavity. For this squeezing, the deformation element can shrink the cavity, or even turn the capsule body inside out. The cavity can thus be emptied and the beverage component separated from the capsule body.

The preparation machine enables to efficiently handle the released beverage component separately from the deformed capsule body, which enhances the disposability and recyclability of processed capsules. Further, the user can have the beverage component composted e.g. at home, and the user is only required to dispose of the deformed capsule bodies, hence a relatively light and compact load.

As the deformation unit is part of the preparation machine, it provides an all-in-one compact equipment for processing the capsules and enhancing their disposability and recyclability. Moreover, the deformation unit may be added to the preparation machine, thus allowing retrofitting the existing preparation machines.

In the present disclosure, the term "capsule" may be understood as designating any container that contains a dose of beverage component(s), for example a pod or a cartridge. Such dose of beverage component(s) is usually suitable for preparing one beverage (single-serve), two or a few beverages. A capsule may include an inner wall arranged to divide the cavity into two or more sub-cavities for respectively containing as many beverage components. The preparation machine may be configured to process capsules of a given shape, for example symmetrical, frustoconical, spheroidal, etc.

The beverage component may be selected within the list of: roast and ground coffee, a soluble ingredient such as milk-based, chocolate, soup, infusion or herbal tea ingredients as well as nutritional soluble compositions, and more generally any liquid edible composition for human or animal consumption and/or mixtures thereof.

The fluid may be water or milk. During preparation of a beverage, the beverage component may be made to interact with the fluid injected in the capsule in order to produce any ingestible substance, for example coffee, tea, milk, cream, soup, puree, medication, etc.

When the capsule body is deformed, the cavity may be shrunk to a volume of less than 50%, preferably less than 25%, more preferably less than 10%, of the volume the cavity has before the capsule body is deformed. In an implementation, after the cavity has been shrunk, hence its volume reduced, the deformation element may further deform the capsule body until the capsule body is generally turned inside out.

The pressure exerted by the deformation element on the capsule body may advantageously be selected to be higher than the strength of the capsule body, which strength is determined by the dimensions and materials of the capsule body.

According to an embodiment, the deformation element may include a punch.

Thus, the punch can form an efficient deformation element suitable for completely squeezing the capsule or even turning it inside out.

Alternatively to a punch, the deformation element may include a cylinder.

In an implementation, the punch or cylinder may have a pressing face having a size commensurate with a dimension of the capsule body. For example, the size of the pressing face may be selected within the range of 1 to 10 cm.

According to an embodiment, the preparation machine may further comprise a driving unit configured to move the deformation element, the driving unit including a motor or a manual actuator.

Thus, the driving unit can transmit a mechanical force to the deformation element, which can in turn deform the capsule body.

In an implementation, the deformation element may be configured to move in translation. In particular, the deformation element may be formed by a piston. Alternatively or additionally, the deformation element may be arranged to move in rotation.

In an implementation, the motor of the driving unit may be electrically connected with the preparation machine such that the motor is powered by the same source as the preparation unit.

In an implementation, the motor of the driving unit may also be coupled to the preparation unit so as to displace a movable chamber section and selectively open or close the preparation chamber. In other words, the same motor can be used by both the deformation unit and the preparation unit.

In an implementation, the manual actuator may be a crank or a lever, which is coupled to the preparation unit so as to displace a movable chamber section and selectively open or close the preparation chamber.

In an implementation, the driving unit may further comprise a mechanism configured to transmit a force from the motor or from the manual actuator to the deformation element.

According to an embodiment, the deformation unit may further comprise an abutment wall, the deformation element being configured to move, preferably in translation, toward the abutment wall so as to push the capsule against the abutment wall.

Thus, the deformation element can push the capsule against the abutment wall to deform the capsule body.

In an implementation, the abutment wall may be static. Alternatively, the abutment wall may be mobile so as to move toward the deformation element, hence toward a capsule body to be deformed.

According to an embodiment, the preparation machine may further comprise a separation unit configured to separate the deformed capsule body from the beverage component released from the cavity, wherein the separation unit may be part of the deformation unit.

Thus, the released beverage component can be handled, in particular composted or recycled, separately from the deformed capsule body.

In an implementation, the separation unit may be part of the deformation unit. Alternatively, the separation unit may come be an additional unit that is arranged next to the deformation unit. In particular, the separation unit may comprise a receiving grid, which may be arranged substantially horizontally and which is configured to retain the deformed capsule body and let the released beverage component fall through it.

According to an embodiment, the separation unit may comprise a filtering grid configured to retain the deformed capsule body and to let all or part of the beverage component released from the cavity pass through the filtering grid.

Thus, the filtering grid enables a quick separation of the deformed capsule body from the released beverage component. The released beverage component, which is generally a flowable or pasty substance, can pass to one side of the filtering grid, while the deformed capsule body remains on the other side of the filtering grid. The filtering grid can act as a solid/liquid filter.

Preferably, the filtering grid may have holes dimensioned to prevent the capsule body or chunks thereof from passing through.

In an implementation, the filtering grid may form the abutment wall if present. In particular, the filtering grid may extend substantially in a vertical plane.

Alternatively, the filtering grid may be arranged below the deformation element such that the deformed capsule body and the beverage component released from the cavity may fall respectively onto and through the separation grid. In particular, the filtering grid may extend substantially in a horizontal plane.

According to an embodiment, the preparation machine may further comprise a collecting chamber for collecting the beverage component released from the cavity and the deformed capsule body, preferably in separate sections of the collecting chamber, the collecting chamber being preferably part of the deformation unit or of the separation unit if present.

Thus, the collecting chamber enables the user to conveniently handle the released beverage component collected on the one section of the collecting chamber, and the deformed capsule bodies on the other section of the collecting chamber.

In an implementation, the separate sections may be arranged side-by-side or, alternatively, atop one another. Each one of the separate sections may be formed by a receptacle that can be inserted in and removed from the preparation machine quickly and independently from the receptacle of the other section.

Alternatively to this embodiment, the preparation machine may store the released beverage component together with the deformed capsule bodies in a common container. In this alternative, the user shall shake the common container to manually separate the deformed capsule bodies from the released beverage component by density segregation.

According to an embodiment, the preparation machine may further comprise a cutting unit having a cutting element configured to cut the capsule open after the capsule has been processed in the preparation unit and before the capsule body is deformed,
wherein, preferably, the transfer section is configured to allow the transfer, preferably by gravity, of the opened capsule from the cutting unit to the deformation unit.

Thus, as the cutting unit fully opens the capsule, it can facilitate the releasing of the beverage component from the cavity.

In an implementation, the cutting element may be formed by a blade configured to be moved by hand or by a motor.

The cutting unit may be arranged in the preparation unit. Alternatively, the cutting unit may be arranged next to, preferably under, the preparation unit.

According to an embodiment, the preparation unit may be detachably coupled to the deformation unit, to the separation unit if present, and/or to the collecting chamber if present.

Thus, the user can detach from and reattach to the preparation machine the deformation unit and the separation unit if present, in particular to dispose of the deformed capsule bodies and the released beverage component.

In an implementation, the preparation machine may have an accommodating space configured to accommodate most or all of the deformation unit and/or most or all of the separation unit if present. The accommodating space may be formed by a cavity located below, preferably under, the preparation machine. Alternatively, the accommodating space may be located adjacent the preparation unit, preferably next to a side of the preparation unit.

In an implementation, the preparation machine may further comprise coupling means for detachably coupling the deformation unit and/or the separation unit, if present, to the preparation unit.

In an implementation, the deformation unit and/or the separation unit, if present, may be detached by translation out of the preparation unit.

In an implementation, the preparation machine may further comprise locking means configured to lock the deformation unit and/or the separation unit, if present, to the preparation unit. Thus, the locking means can prevent an unintended detachment of the deformation unit and/or the separation unit if present. The locking means may preferably be configured for reversible elastic snap-fitting of said units on one another.

According to an embodiment, the preparation machine may further comprise a transfer section configured to allow a defined transfer, preferably by the action of gravity, of the capsule from the preparation chamber to the deformation unit, preferably via the cutting unit if present.

Thus, the capsule can automatically transit from the preparation unit to the deformation unit and the cutting unit, if present, which enhances the convenience for the user.

In an implementation, the deformation unit and the preparation unit may be configured such that, when the deformation unit and the preparation unit are coupled, the capsule may be displaced, preferably by the action of gravity, from the preparation chamber to a place within the reach of the deformation element, for example after the capsule has been processed in the preparation unit.

In an implementation, the transfer section may be a passage, which joins the preparation chamber to the deformation unit and which is oriented substantially vertically. The capsule may be transferred by simply falling through the passage. Thus, the passage forms a compact transfer section. Preferably, the passage may be an opening or a duct.

The deformation unit further comprises a cleaning device, the cleaning device being fluidly connected with a fluid injection unit, the cleaning device being configured to rinse the capsule body with some of the fluid after the capsule has been processed in the preparation unit, the cleaning device being arranged downstream the deformation unit .

Thus, the cleaning device can remove some beverage component that might be stuck to the capsule body.

The fluid injection unit is further configured to inject fluid in the capsule when the capsule is in the preparation chamber so as to prepare the beverage. So the fluid injection unit can supply fluid for preparing a beverage. As the same fluid injection unit is used both for preparing a beverage and for rinsing the capsule body, the overall footprint can be reduced.

According to an embodiment, the preparation machine may further comprise a dispensing unit for dispensing the beverage out of the preparation unit.

According to another aspect, the present invention is directed to a deformation unit for being used in a preparation machine according to any one of preceding aspect, embodiments and implementations, the deformation unit being configured to be coupled, preferably in a detachable manner, to the preparation unit such that the capsule may be transferred from the preparation chamber to the deformation unit, the deformation unit having i) the deformation element and ii) a drive connection for functionally connecting the deformation element with a or the driving unit of the preparation machine to selectively move the deformation element.

Thus, when the deformation unit is used in a preparation machine, the processed capsule can be squeezed by the deformation element to release most or all of the used beverage component from the cavity.

According to yet another aspect, the present invention is directed to a method for preparing a beverage with a preparation machine according to any one of preceding aspect, embodiments and implementations, the method comprising:
- receiving a capsule in the preparation chamber,
- preparing a beverage by injecting the fluid in the capsule such that the fluid interacts with the beverage component,
- preferably, transferring the capsule from the preparation unit to the deformation unit after the capsule has been processed in the preparation unit, and
- moving the deformation element to deform the capsule body such that at least part of the beverage component is released from the cavity.

Thus, when this method is carried out, the processed capsule can be squeezed by the deformation element to release most or all of the used beverage component from the cavity.

In the present disclosure, the relative terms "horizontal", "vertical", "below", "under", "bottom" and "top" generally refer to the configuration where the preparation machine is in service for preparing a beverage.

The words "comprise", "include", "have" and their derivatives are to be interpreted inclusively rather than exclusively. The term "and/or" used in the context of "X and/or Y" should be interpreted as "X," or "Y," or "X and Y."

### 4. Brief description of drawings

Further features, details and advantages of the present invention are described hereinafter, in particular in relation to the appended figures, which illustrate some of the afore-described aspects, embodiments and implementations thereof, and in which:
- Fig.1: shows a schematic cross-sectional view of a preparation machine including a deformation unit according to the present invention to illustrate a step of preparing a beverage;
- Fig.2: shows a view similar to Fig.1 to illustrate a step of transferring the capsule from the preparation unit to the deformation unit after the capsule has been processed in the preparation unit;
- Fig.3: shows a view similar to Fig.1 after the transferring step has been performed;
- Fig.4: shows a view similar to Fig.1 to illustrate a step of deforming the capsule body, releasing beverage component from the cavity, and separating the released beverage component from the deformed capsule body;
- Fig.5: shows a view similar to Fig.1 to illustrate a step of collecting the released beverage component;
- Fig.6: shows a view similar to Fig.1 to illustrate a step of collecting the capsule body;
- Fig.7: shows a view similar to Fig.1 to illustrate the preparation machine after the collecting steps of Figs.5-6 and with open beverage preparation unit; and
- Fig.8: shows a flowchart of a method according to the present invention for preparing a beverage.

### 5. Detailed description

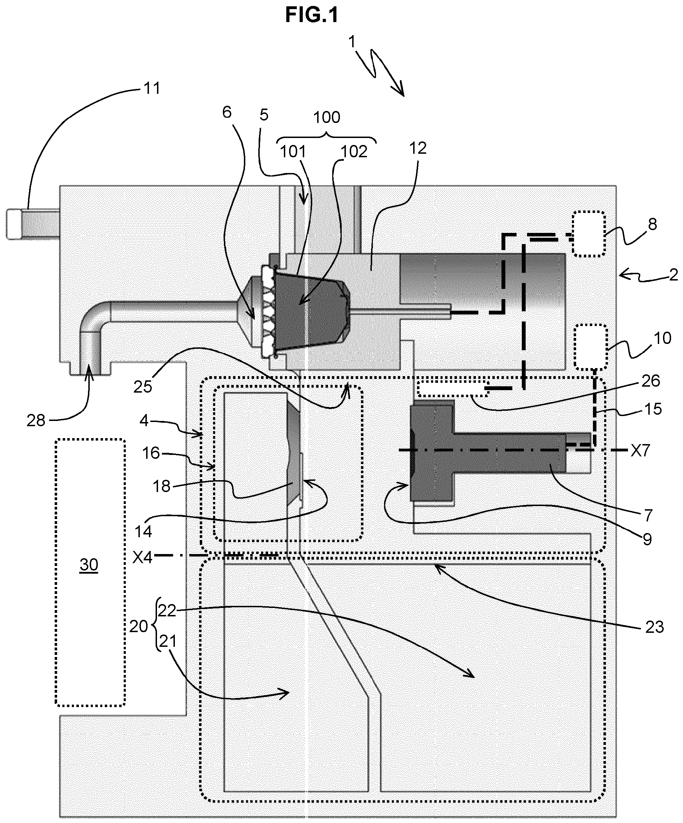

Fig.1 shows a preparation machine 1 for preparing a beverage by injecting a fluid in a capsule 100. The preparation machine 1 may be of a Nespresso Essenza Mini^{®} or a Nespresso Pixie^{®}. The capsule 100 may be a Nespresso original^{®}.

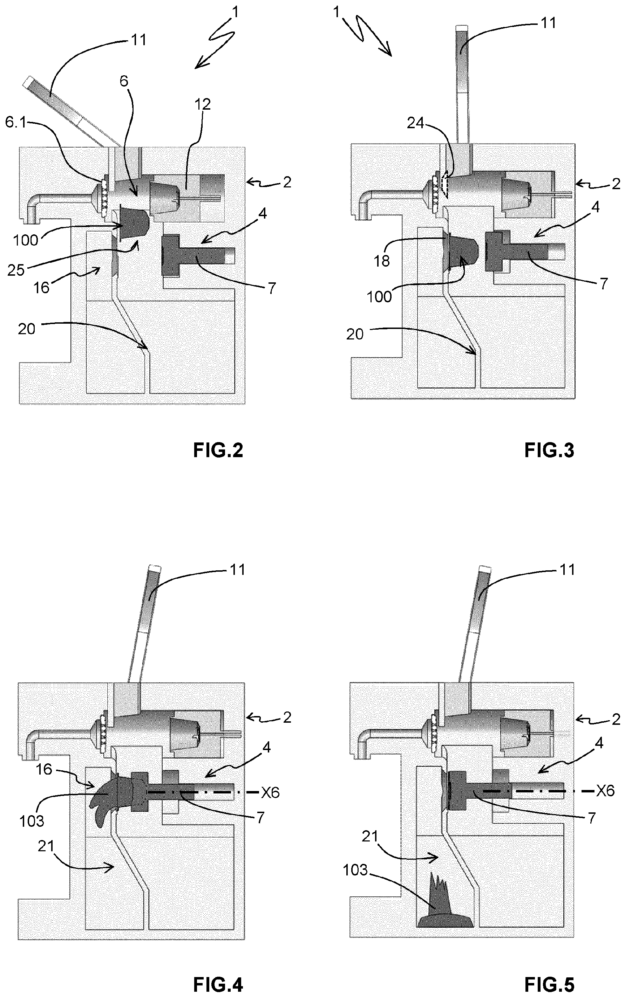

The capsule 100 has i) a capsule body 101 defining a cavity 102 and ii) a beverage component 103 (Figs.4-5) contained within the cavity 102. The beverage component 103 may be roast and ground coffee.

The preparation machine 1 comprises a preparation unit 2 and a deformation unit 4. The preparation unit 2 may be located above the deformation unit 4. The preparation machine 1 has an introduction duct 5 (Fig.1) for introducing the capsule 100 into the beverage preparation unit 2. The preparation unit 2 has a preparation chamber 6 (Fig.1), which is suitable for receiving the capsule 100. The preparation chamber 6 may include a pyramid plate 6.1 (Fig.2) covered with sharp pyramids configured to tear open a closing membrane of the capsule 100 and let the prepared beverage flow out of the capsule 100.

The preparation unit 2 also has a fluid injection unit 8 (Fig.1), which may be configured for injecting the fluid in the capsule 100 to prepare the beverage when the capsule is in the preparation chamber 6. The fluid may be hot water under pressure. During preparation of a beverage (Fig.1), the beverage component 103 may be made to interact with the fluid injected in the capsule 100 in order to produce a cup of coffee.

The deformation unit 4 has a deformation element 7. As shown in Figs.2-5, the deformation element 7 is movable to deform the capsule body 101 in order to release most or all of the beverage component 103 from the cavity 102 after the capsule 100 has been processed in the preparation unit 2. In the example of Figs.1-7, as the processed capsule 100 is squeezed, the deformation element 7 can shrink the cavity 102 to less than 10% of its initial volume, that is, the volume the cavity 102 had before the capsule body 101 is deformed. Thus, practically all of the used beverage component 103 can be released from the cavity 102.

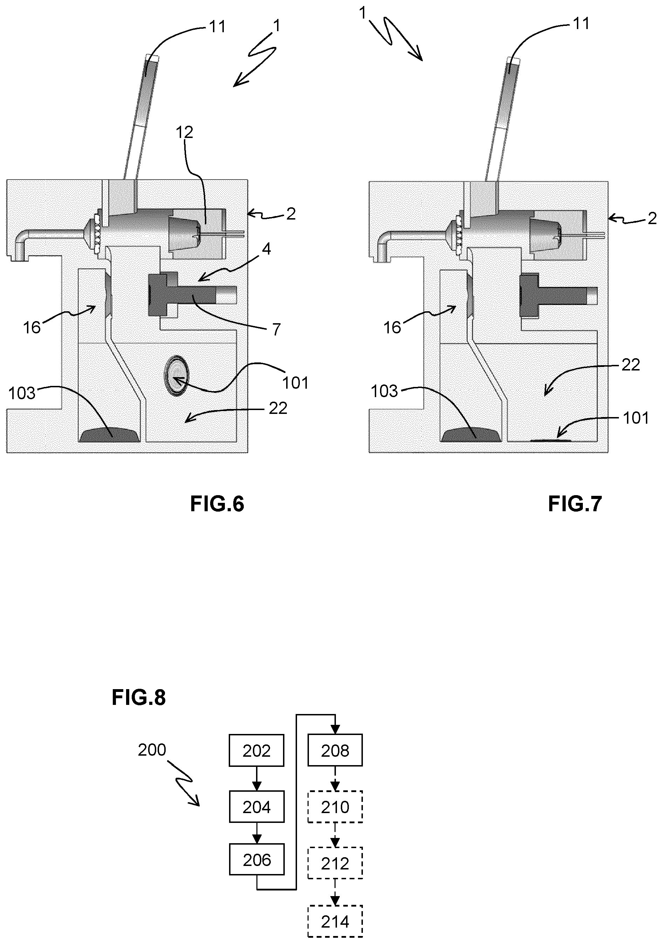

The deformation element 7 may be formed by a piston and include a cylinder. As visible in Fig.6-7, the deformation element 7 may be configured to completely deform the capsule body 101, thus releasing practically all of the beverage component 103 from the cavity 102. The deformation element 7 may have a pressing face 9, which has a size commensurate with the largest dimension of the capsule body 101, for example a width or diameter of 4 cm.

The preparation machine 1 may further comprise a driving unit 10 (Fig.1), which is configured to move the deformation element 7 in translation along direction X7, selectively back and forth. The driving unit 10 may include a motor (not shown), which may be powered by the same source as the preparation unit 2 and the fluid injection unit 8.

The driving unit 10 may be mechanically connected with the deformation element 7 in order to transmit a mechanical force, possibly via mechanism (not shown), to the deformation element 7. In turn, the deformation element 7 can deform the capsule body 101 as shown in Fig.4-5.

Thus, when the deformation unit 4 is used in a preparation machine 1, the processed capsule 100 can be squeezed by the deformation element 7 to release most or all of the used beverage component 103 from the cavity 102.

The preparation machine 1 may further comprise a crank 11 which may be coupled to the preparation unit 2 so as to manually displace a movable chamber section 12, and thus selectively open or close the preparation chamber 6.

In Fig.1 the crank 11 may be horizontally placed in a first end position as the movable chamber section 12 is closing the preparation chamber 6 and the capsule 100 is processed by extraction. In Fig.2 the crank 11 may be in an intermediate position as the preparation chamber 6 is partly reopened. In Fig.3 the crank 11 may be in a vertical position as the preparation chamber 6 is fully open.

In Figs.4-7 the crank 11 is placed in a second end position past the vertical position of Fig.3. Once the user pushes the crank 11 past the vertical position (Fig.4), the crank 11 may activate a switch (not shown), which actuates the driving unit 10 which in turn moves the deformation element 7. The driving unit 10 may be activated after a predetermined time, e.g. 5 seconds, so as to ensure that the capsule can reach the deformation unit 4 and can thus undergo a deformation of the capsule body 101.

The deformation unit 4 may further comprise a static abutment wall 14. The deformation element 7 may be configured to move toward the abutment wall 14 to push the capsule against the abutment wall 14.

The deformation unit 4 may further have a drive connection 15 functionally connecting the deformation element 7 with the driving unit 10 to selectively move the deformation element 7, for example successively toward and away from the abutment wall 14 along direction X7.

The preparation machine 1 may further comprise a separation unit 16, which is configured to separate the deformed capsule body 101 (Figs.4-7) from the beverage component 103 released from the cavity 102. In the example of Figs.1-7, the separation unit 16 may be part of the deformation unit 4.

The separation unit 16 may comprise a filtering grid 18, which is configured to retain the deformed capsule body 101 (Fig.5) and to let the beverage component 103 released from the cavity 102 pass through the filtering grid 18 (Fig.4). In Fig.3, the capsule 100 is placed against the abutment wall 14 and the filtering grid 18. The released beverage component 103 can pass to the left side of the filtering grid 18, while the deformed capsule body 101 remains on the right side of the filtering grid 18. After the separation, the released beverage component 103 (Figs.4-7) can be handled by the user separately from the deformed capsule body 101.

In the example of Figs.1-7, the filtering grid 18 may form the abutment wall 14. The filtering grid 18 may extend substantially in a vertical plane perpendicular to the plane of Fig.1.

The preparation machine 1 may further comprise a collecting chamber 20 configured for collecting the released beverage component 103 and the deformed capsule body 101, respectively in separate sections 21, 22 arranged side-by-side. The released beverage component 103 may be collected in the left section 21, while the deformed capsule bodies 101 may be collected in the right section 22. The separate sections 21, 22 may each be formed by a respective receptacle that can be inserted in and removed from the preparation machine 1.

In the example of Figs.1-7, the collecting chamber 20 may be located below the separation unit 16 but the collecting chamber 20 is integral with the deformation unit 4 and with the separation unit 16, so the user can conveniently detach and reattach them altogether. Thus, the user can conveniently handle the released beverage component 103 and the deformed capsule bodies 101 and empty the collecting chamber 20.

The preparation unit 2 may be detachably coupled to deformation unit 4, to the separation unit 16, and/or to the collecting chamber 20. The deformation unit 4, the separation unit 16 and/or the collecting chamber 20 may be detached from the preparation unit 2 by translation along direction X4, which is substantially horizontal in the example of Figs.1-7.

The preparation machine 2 may have an accommodating space 23 for accommodating most or all of the deformation unit 4, of the separation unit 16 and of the collecting chamber 20. The accommodating space 23 may be formed by a cavity located under the preparation unit 2.

The preparation machine 1 may further comprise coupling means (not shown) for detachably coupling the deformation unit 4 and/or the separation unit 16 to the preparation unit 2. The preparation machine 1 may further comprise locking means (not shown) for locking the deformation unit 4 and/or the separation unit 16 to the preparation unit 2. The locking means may preferably be configured for reversible elastic snap-fitting of said units on one another.

The preparation machine 1 may further comprise a cutting unit (not shown) having a cutting element like a blade configured to be moved by a manual actuator or by a motor. The cutting element may be configured to cut the capsule 100 open after the capsule 100 has been processed in the preparation unit 2 and before the capsule body 101 is deformed. This might be necessary for certain kind of capsules. The cutting unit may be arranged to cut the capsule 100 within the preparation chamber 6 before the capsule body 101 is transferred to and deformed in the deformation unit 4.

The preparation machine 1 may further comprise a transfer section 25 for allowing a transfer, by the action of gravity, of the capsule 100 from the preparation chamber 2 to the deformation unit 4. In Fig.2, the capsule 100 is passing through the transfer section 25. The transfer section 25 may be a passage joining the preparation chamber 6 to the deformation unit 4 and oriented substantially vertically.

After the preparation chamber 6 opens, the processed capsule 100 is free to fall through transfer section 25 and into the deformation unit 4, hence within the reach of the deformation element 7. When a cutting unit is present, the transfer section 25 may be configured to allow the transfer, preferably by gravity, of the opened capsule 100 from the cutting unit to the deformation unit 4.

The deformation unit 4 may further comprise a cleaning device 26 (Fig.1) for rinsing the capsule body 101 with fluid after the capsule 100 has been processed in the preparation unit 2. The cleaning device 26 can enhance removal of beverage component 103 from the deformed capsule body 101. The cleaning device 26 may be fluidly connected with the fluid injection unit 8 for a supply of fluid, for example water. The cleaning device 26 may be arranged downstream the deformation unit 4. The collecting chamber 20 may be configured to collect also the rinsing fluid after the rinsing has been carried out.

In addition or alternatively to the cleaning device 26, the preparation machine 1 may further comprise a drying module (not shown) configured for partly or totally dry out the beverage component. The drying module may be part of the separation unit 16. The drying module may be arranged close to the filtering grid 18. Thus, the drying module can enhance the separation of the beverage component 103 from the capsule body 101, in particular on the filtering grid 18.

The preparation machine 1 may further comprise a dispensing unit 28 for dispensing the beverage out of the preparation unit 2. The dispensing unit 28 may be fluidly connected with the preparation chamber 6 and have a duct for guiding the beverage out of the preparation machine 1. The dispensing unit 28 may further have a filling space 30 where a drinking cup of a user may be placed such that the beverage can be dispensed therein. The filling space 30 may be located in front of the deformation unit 4.

When the preparation machine 1 is in service, it can be operated to prepare a beverage perform according to a method 200 illustrated in Fig.8. The method 200 comprises:
- 202) receiving a capsule 100 in the preparation chamber 6,
- 204) preparing a beverage by injecting the fluid in the capsule 100 such that the fluid interacts with the beverage component 103,
- 206) preferably, transferring the capsule 100, via the transfer section 25, from the preparation unit 2 to the deformation unit 4 after the capsule 100 has been processed in the preparation unit 2, and
- 208) moving the deformation element 7 to deform the capsule body 101 such that at least part of the beverage component 103 is released from the cavity 102.

The user can thus easily handle the released beverage component 103 separately from the deformed capsule body 101. The disposability and recyclability of processed capsules 100 is enhanced. For example, the beverage component 103 can be composted at home.

Further, the method 200 may further comprise:
- 210) separating, by means of separation unit 16, the deformed capsule body 101 from the released beverage component 103, wherein the separation unit may be part of the deformation unit;
- 212) actuating a cleaning device 26 to rinse the deformed capsule body 101 by means of fluid; and
- 214) collecting in the collecting chamber 20, preferably in the separate sections 21, 22 thereof, the released beverage component 103 and the deformed capsule body 101.

As long as the present invention remains covered by the appended claims, the present invention is not limited to the afore-described aspects, embodiments and implementations, most of which may be combined.

## Claims

1. Preparation machine (1) for preparing a beverage by injecting a fluid in a capsule (100), the capsule (100) having i) a capsule body (101) defining a cavity (102) and ii) a beverage component (103) contained within the cavity (102), wherein the preparation machine (1) comprises:
- a preparation unit (2) having i) a preparation chamber (5) for receiving the capsule (100) and ii) means for injecting the fluid in the capsule (100) to prepare the beverage, and
- a deformation unit (4) having a deformation element (7), the deformation element (7) being movable so as to deform the capsule body (101) such that at least part of the beverage component (103) is released from the cavity (102) after the capsule (100) has been processed in the preparation unit (2),
wherein the deformation unit (4) further comprises a cleaning device (26), the cleaning device (26) being fluidly connected with a fluid injection unit, the same fluid injection unit being further configured to inject fluid in the capsule when the capsule is in the preparation chamber so as to prepare the beverage, the cleaning device (26) being configured to rinse the capsule body (101) with some of the fluid after the capsule (100) has been processed in the preparation unit (2), the cleaning device (26) being arranged downstream the deformation unit (4).

2. Preparation machine (1) according to claim 1, wherein the deformation element (7) includes a punch.

3. Preparation machine (1) according to any one of the preceding claims, further comprising a driving unit (10) configured to move the deformation element (7), the driving unit (10) including a motor or a manual actuator.

4. Preparation machine (1) according to any one of the preceding claims, wherein the deformation unit (4) further comprises an abutment wall (14), the deformation element (7) being configured to move, preferably in translation, toward the abutment wall (14) so as to push the capsule (100) against the abutment wall (14).

5. Preparation machine (1) according to any one of the preceding claims, further comprising a separation unit (16) configured to separate the deformed capsule body (101) from the beverage component (103) released from the cavity (102), wherein the separation unit (16) may be part of the deformation unit (4).

6. Preparation machine (1) according to claim 5, wherein the separation unit (16) comprises a filtering grid (18) configured to retain the deformed capsule body (101) and to let all or part of the beverage component (103) released from the cavity (102) pass through the filtering grid (18).

7. Preparation machine (1) according to any one of the preceding claims, further comprising a collecting chamber (20) for collecting the beverage component (103) released from the cavity (102) and the deformed capsule body (101), preferably in separate sections (21, 22) of the collecting chamber (20), the collecting chamber (20) being preferably part of the deformation unit (4) or of the separation unit (16) if present.

8. Preparation machine (1) according to any one of the preceding claims, further comprising a cutting unit having a cutting element configured to cut the capsule (100) open after the capsule (100) has been processed in the preparation unit (2) and before the capsule body (101) is deformed, wherein, preferably, the transfer section is configured to allow the transfer, preferably by gravity, of the opened capsule from the cutting unit to the deformation unit.

9. Preparation machine (1) according to any one of the preceding claims, wherein the preparation unit (2) is detachably coupled to the deformation unit (4), to the separation unit (16) if present, and/or to the collecting chamber (20) if present.

10. Preparation machine (1) according to any one of the preceding claims, further comprising a transfer section (25) configured to allow a defined transfer, preferably by the action of gravity, of the capsule (100) from the preparation chamber (5) to the deformation unit (4), preferably via the cutting unit if present.

11. Preparation machine (1) according to any one of the preceding claims, further comprising a dispensing unit (28) for dispensing the beverage out of the preparation unit (2).

12. Method (200) for preparing a beverage with a preparation machine (1) according to any one of claims 1 to 11, the method (200) comprising:
- (202) receiving a capsule (100) in the preparation chamber,
- (204) preparing a beverage by injecting the fluid in the capsule (100) such that the fluid interacts with the beverage component (103),
- (206), transferring the capsule (100) from the preparation unit (2) to the deformation unit (4) after the capsule (100) has been processed in the preparation unit (2), and
- (208) moving the deformation element (7) to deform the capsule body (101) such that at least part of the beverage component (103) is released from the cavity (102),
**characterized in that** it further comprises the step of:
- rinsing the capsule body (101) with fluid after the capsule (100) has been processed in the preparation unit (2), and after the capsule body (101) has been deformed in the deformation unit (4), the cleaning fluid being supplied by the same injection unit that supplies fluid for the preparation of a beverage.

## Patentansprüche

1. Zubereitungsmaschine (1) zum Zubereiten eines Getränks durch Einspritzen eines Fluids in eine Kapsel (100), wobei die Kapsel (100) i) einen Kapselkörper (101), der einen Hohlraum (102) definiert, und ii) eine Getränkekomponente (103), die innerhalb des Hohlraums (102) enthalten ist, aufweist, wobei die Zubereitungsmaschine (1) umfasst:
- eine Zubereitungseinheit (2), die i) eine Zubereitungskammer (5) zum Aufnehmen der Kapsel (100) und ii) Mittel zum Einspritzen des Fluids in die Kapsel (100), um das Getränk zuzubereiten, aufweist, und
- eine Verformungseinheit (4), die ein Verformungselement (7) aufweist, wobei das Verformungselement (7) bewegbar ist, um den Kapselkörper (101) derart zu verformen, dass mindestens ein Teil der Getränkekomponente (103) aus dem Hohlraum (102) freigesetzt wird, nachdem die Kapsel (100) in der Zubereitungseinheit (2) verarbeitet wurde,
wobei die Verformungseinheit (4) ferner eine Reinigungsvorrichtung (26) umfasst, wobei die Reinigungsvorrichtung (26) mit einer Fluideinspritzeinheit fluidisch verbunden ist, wobei dieselbe Fluideinspritzeinheit ferner konfiguriert ist, um Fluid in die Kapsel einzuspritzen, wenn die Kapsel in der Zubereitungskammer ist, um das Getränk zuzubereiten, wobei die Reinigungsvorrichtung (26) konfiguriert ist, um den Kapselkörper (101) mit etwas des Fluids zu spülen, nachdem die Kapsel (100) in der Zubereitungseinheit (2) verarbeitet wurde, wobei die Reinigungsvorrichtung (26) stromabwärts der Verformungseinheit (4) angeordnet ist.

2. Zubereitungsmaschine (1) nach Anspruch 1, wobei das Verformungselement (7) einen Stempel einschließt.

3. Zubereitungsmaschine (1) nach einem der vorstehenden Ansprüche, ferner umfassend eine Antriebseinheit (10), die konfiguriert ist, um das Verformungselement (7) zu bewegen, die Antriebseinheit (10) einschließlich eines Motors oder eines manuellen Stellantriebs.

4. Zubereitungsmaschine (1) nach einem der vorstehenden Ansprüche, wobei die Verformungseinheit (4) ferner eine Anschlagwand (14) umfasst, wobei das Verformungselement (7) konfiguriert ist, um sich vorzugsweise translatierend in Richtung der Anschlagwand (14) zu bewegen, um die Kapsel (100) gegen die Anschlagwand (14) zu drücken.

5. Zubereitungsmaschine (1) nach einem der vorstehenden Ansprüche, ferner umfassend eine Trenneinheit (16), die konfiguriert ist, um den verformten Kapselkörper (101) von der Getränkekomponente (103), die aus dem Hohlraum (102) freigesetzt wird, zu trennen, wobei die Trenneinheit (16) Teil der Verformungseinheit (4) sein kann.

6. Zubereitungsmaschine (1) nach Anspruch 5, wobei die Trenneinheit (16) ein Filtergitter (18), das konfiguriert ist, um den verformten Kapselkörper (101) zurückzuhalten und um die gesamte oder einen Teil der Getränkekomponente (103), die aus dem Hohlraum (102) freigesetzt wird, durch das Filtergitter (18) laufen zu lassen, umfasst.

7. Zubereitungsmaschine (1) nach einem der vorstehenden Ansprüche, ferner umfassend eine Auffangkammer (20) zum Auffangen der Getränkekomponente (103), die aus dem Hohlraum (102) freigesetzt wird, und des verformten Kapselkörpers (101), vorzugsweise in getrennten Abschnitten (21, 22) der Auffangkammer (20), wobei die Auffangkammer (20) vorzugsweise Teil der Verformungseinheit (4) oder der Trenneinheit (16), falls vorhanden, ist.

8. Zubereitungsmaschine (1) nach einem der vorstehenden Ansprüche, ferner umfassend eine Schneideinheit, die ein Schneidelement aufweist, das konfiguriert ist, um die Kapsel (100) aufzuschneiden, nachdem die Kapsel (100) in der Zubereitungseinheit (2) verarbeitet wurde und bevor der Kapselkörper (101) verformt wird, wobei der Transferabschnitt vorzugsweise konfiguriert ist, um den Transfer der geöffneten Kapsel, vorzugsweise durch Schwerkraft, von der Schneideinheit zu der Verformungseinheit zu ermöglichen.

9. Zubereitungsmaschine (1) nach einem der vorstehenden Ansprüche, wobei die Zubereitungseinheit (2) mit der Verformungseinheit (4), der Trenneinheit (16), falls vorhanden, und/oder der Auffangkammer (20), falls vorhanden, lösbar gekoppelt ist.

10. Zubereitungsmaschine (1) nach einem der vorstehenden Ansprüche, ferner umfassend einen Transferabschnitt (25), der konfiguriert ist, um einen definierten Transfer, vorzugsweise durch die Wirkung von Schwerkraft, der Kapsel (100) von der Zubereitungskammer (5) zu der Verformungseinheit (4), vorzugsweise über die Schneideinheit, falls vorhanden, zu ermöglichen.

11. Zubereitungsmaschine (1) nach einem der vorstehenden Ansprüche, ferner umfassend eine Abgabeeinheit (28) zum Abgeben des Getränks aus der Zubereitungseinheit (2).

12. Verfahren (200) zum Zubereiten eines Getränks mit einer Zubereitungsmaschine (1) nach einem der Ansprüche 1 bis 11, das Verfahren (200) umfassend:
- (202) Aufnehmen einer Kapsel (100) in der Zubereitungskammer,
- (204) Zubereiten eines Getränks durch derart Einspritzen des Fluids in die Kapsel (100), dass das Fluid mit der Getränkekomponente (103) interagiert,
- (206), Transferieren der Kapsel (100) von der Zubereitungseinheit (2) zu der Verformungseinheit (4), nachdem die Kapsel (100) in der Zubereitungseinheit (2) verarbeitet wurde, und
- (208) Bewegen des Verformungselements (7), um den Kapselkörper (101) derart zu verformen, dass mindestens ein Teil der Getränkekomponente (103) aus dem Hohlraum (102) freigesetzt wird,
**dadurch gekennzeichnet, dass** es ferner die Schritte umfasst:
- Spülen des Kapselkörpers (101) mit Fluid, nachdem die Kapsel (100) in der Zubereitungseinheit (2) verarbeitet wurde und nachdem der Kapselkörper (101) in der Verformungseinheit (4) verformt wurde, wobei das Reinigungsfluid durch die dieselbe Einspritzeinheit, die Fluid für die Zubereitung eines Getränks zuführt, zugeführt wird.

## Revendications

1. Machine de préparation (i) permettant de préparer une boisson en injectant un fluide dans une capsule (100), la capsule (100) ayant i) un corps de capsule (101) définissant une cavité (102) et ii) un composant de boisson (103) contenu à l'intérieure de la cavité (102), dans laquelle la machine de préparation (1) comprend :
- une unité de préparation (2) ayant i) une chambre de préparation (5) destinée à recevoir la capsule (100) et ii) un moyen destiné à injecter le fluide dans la capsule (100) pour préparer la boisson, et
- une unité de déformation (4) ayant un élément de déformation (7), l'élément de déformation (7) étant mobile afin de déformer le corps de capsule (101) de telle sorte qu'au moins une partie du composant de boisson (103) est libérée de la cavité (102) après que la capsule (100) a été traitée dans l'unité de préparation (2),
dans laquelle l'unité de déformation (4) comprend en outre un dispositif de nettoyage (26), le dispositif de nettoyage (26) étant relié de manière fluide à une unité d'injection de fluide, la même unité d'injection de fluide étant en outre conçue pour injecter un fluide dans la capsule lorsque la capsule se trouve dans la chambre de préparation afin de préparer la boisson, le dispositif de nettoyage (26) étant conçu pour rincer le corps de capsule (101) avec une partie du fluide après que la capsule (100) a été traitée dans l'unité de préparation (2), le dispositif de nettoyage (26) étant agencé en aval de l'unité de déformation (4).

2. Machine de préparation (1) selon la revendication 1, dans laquelle l'élément de déformation (7) comporte un poinçon.

3. Machine de préparation (1) selon l'une quelconque des revendications précédentes, comprenant en outre une unité d'entraînement (10) conçue pour déplacer l'élément de déformation (7), l'unité d'entraînement (10) comportant un moteur ou un actionneur manuel.

4. Machine de préparation (1) selon l'une quelconque des revendications précédentes, dans laquelle l'unité de déformation (4) comprend en outre une paroi de butée (14), l'élément de déformation (7) étant conçu pour se déplacer, de préférence en translation, vers la paroi de butée (14) afin de pousser la capsule (100) contre la paroi de butée (14).

5. Machine de préparation (1) selon l'une quelconque des revendications précédentes, comprenant en outre une unité de séparation (16) conçue pour séparer le corps de capsule (101) déformé du composant de boisson (103) libéré de la cavité (102), dans laquelle l'unité de séparation (16) peut faire partie de l'unité de déformation (4).

6. Machine de préparation (1) selon la revendication 5, dans laquelle l'unité de séparation (16) comprend une grille de filtrage (18) conçue pour retenir le corps de capsule (101) déformé et pour laisser passer tout ou partie du composant de boisson (103) libéré de la cavité (102) à travers la grille de filtrage (18).

7. Machine de préparation (1) selon l'une quelconque des revendications précédentes, comprenant en outre une chambre de collecte (20) destinée à collecter le composant de boisson (103) libéré de la cavité (102) et le corps de capsule (101) déformé, de préférence dans des sections séparées (21, 22) de la chambre de collecte (20), la chambre de collecte (20) faisant de préférence partie de l'unité de déformation (4) ou de l'unité de séparation (16) si elle est présente.

8. Machine de préparation (1) selon l'une quelconque des revendications précédentes, comprenant en outre une unité de coupe ayant un élément de coupe conçu pour couper la capsule (100) après que la capsule (100) a été traitée dans l'unité de préparation (2) et avant que le corps de capsule (101) ne soit déformé, dans laquelle, de préférence, la section de transfert est conçue pour permettre le transfert, de préférence par gravité, de la capsule ouverte de l'unité de coupe à l'unité de déformation.

9. Machine de préparation (1) selon l'une quelconque des revendications précédentes, dans laquelle l'unité de préparation (2) est accouplée de manière amovible à l'unité de déformation (4), à l'unité de séparation (16) si elle est présente, et/ou à la chambre de collecte (20) si elle est présente.

10. Machine de préparation (1) selon l'une quelconque des revendications précédentes, comprenant en outre une section de transfert (25) conçue pour permettre un transfert défini, de préférence par l'action de la gravité, de la capsule (100) de la chambre de préparation (5) à l'unité de déformation (4), de préférence par l'intermédiaire de l'unité de coupe si elle est présente.

11. Machine de préparation (1) selon l'une quelconque des revendications précédentes, comprenant en outre une unité de distribution (28) destinée à distribuer la boisson hors de l'unité de préparation (2).

12. Procédé (200) permettant de préparer une boisson avec une machine de préparation (1) selon l'une quelconque des revendications 1 à 11, le procédé (200) comprenant :
- (202) la réception d'une capsule (100) dans la chambre de préparation,
- (204) la préparation d'une boisson en injectant le fluide dans la capsule (100) de telle sorte que le fluide interagit avec le composant de boisson (103),
- (206) le transfert de la capsule (100) de l'unité de préparation (2) à l'unité de déformation (4) après que la capsule (100) a été traitée dans l'unité de préparation (2), et
- (208) le déplacement de l'élément de déformation (7) pour déformer le corps de capsule (101) de telle sorte qu'au moins une partie du composant de boisson (103) est libéré de la cavité (102),
**caractérisé en ce qu'**il comprend en outre l'étape consistant à :
- rincer le corps de capsule (101) avec un fluide après que la capsule (100) a été traitée dans l'unité de préparation (2) et après que le corps de capsule (101) a été déformé dans l'unité de déformation (4), le fluide de nettoyage étant fourni par la même unité d'injection que celle qui fournit n fluide pour la préparation d'une boisson.
